(19) Europäisches Patentamt
European Patent Office
Office européen des brevets

(11) EP 4 797 345 A1

(12) EUROPEAN PATENT APPLICATION

(43) Date of publication:
**26.08.2026 Bulletin 2026/35**

(21) Application number: **26157446.1**

(22) Date of filing: **10.02.2026**

(51) International Patent Classification (IPC):
***H01M 4/136*** *(2010.01)* ***H01M 4/36*** *(2006.01)*
***H01M 4/58*** *(2010.01)*

(52) Cooperative Patent Classification (CPC):
**H01M 4/366; H01M 4/131; H01M 4/136; H01M 4/364; H01M 4/525; H01M 4/5825; H01M 10/0525;** H01M 2004/021; H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.02.2025 KR 20250022559**

(71) Applicant: **SAMSUNG SDI CO., LTD.**
**Yongin-si, Gyeonggi-do 17084 (KR)**

(72) Inventors:
- **NAM, Sanghee**
**17084 Yongin-si, Gyeonggi-do (KR)**
- **OH, Songyul**
**17084 Yongin-si, Gyeonggi-do (KR)**
- **SUH, Soonsung**
**17084 Yongin-si, Gyeonggi-do (KR)**
- **LEE, Boram**
**17084 Yongin-si, Gyeonggi-do (KR)**

(74) Representative: **Michalski Hüttermann & Partner mbB**
**Kaistraße 16A**
**40221 Düsseldorf (DE)**

# (54) POSITIVE ELECTRODES AND RECHARGEABLE LITHIUM BATTERIES

(57) Disclosed are a positive electrode and a rechargeable lithium battery. The positive electrode includes a positive electrode current collector, and a positive electrode active material layer on the positive electrode current collector. The positive electrode active material layer includes a first positive electrode active material layer adjacent to the positive electrode current collector, and a second positive electrode active material layer facing the positive electrode current collector with the first positive electrode active material layer interposed therebetween. The first positive electrode active material layer includes a first positive electrode active material and a first irreversible positive electrode additive. The second positive electrode active material layer includes a second positive electrode active material and a second irreversible positive electrode additive. An average particle diameter ($D_{50}$) of the first irreversible positive electrode additive is larger than an average particle diameter ($D_{50}$) of the second irreversible positive electrode additive.

FIG. 5

Processed by Luminess, 75001 PARIS (FR)

## Description

## BACKGROUND

### 1. Field

A positive electrode and a rechargeable lithium battery are disclosed.

### 2. Description of the Related Art

A portable information device such as, e.g., a cell phone, a laptop, smart phone, and the like, typically uses a rechargeable lithium battery having high energy density and portability as a driving power source. A rechargeable lithium battery with high energy density may also constitute a driving power source or power storage source for, e.g., hybrid or electric vehicles.

Various positive electrodes may implement rechargeable lithium batteries suitable for these applications. Methods for rapid negative electrode activation and high undischarged capacity induction by increasing the reversible lithium content may improve cycle-life of rechargeable lithium batteries. The commercialization of a pre-lithiation method that intercalates reversible lithium into the negative electrode in advance during formation may be challenging due to the challenge of additional process steps and uneven pre-lithiation. Accordingly, cycle-life characteristics of rechargeable lithium batteries are typically improved by inducing pre-lithiation during formation through an irreversible positive electrode additive without additional processes and facilities, thereby increasing the reversible lithium content and undischarged capacity.

## SUMMARY

Provided are a positive electrode including a small-particle irreversible positive electrode additive and a large-particle irreversible positive electrode additive having different average particle diameters at different locations within a positive electrode active material layer, and a rechargeable lithium battery.

Some example embodiments include a positive electrode including a positive electrode current collector, and a positive electrode active material layer on the positive electrode current collector. The positive electrode active material layer includes a first positive electrode active material layer adjacent to the positive electrode current collector, and a second positive electrode active material layer facing the positive electrode current collector with the first positive electrode active material layer interposed therebetween. The first positive electrode active material layer includes a first positive electrode active material and a first irreversible positive electrode additive. The second positive electrode active material layer includes a second positive electrode active material and a second irreversible positive electrode additive. An average particle diameter ($D_{50}$) of the first irreversible positive electrode additive is larger than an average particle diameter ($D_{50}$) of the second irreversible positive electrode additive.

Some example embodiments include a rechargeable lithium battery including the aforementioned positive electrode, a negative electrode, and an electrolyte.

According to some example embodiments, a positive electrode and a rechargeable lithium battery include a small-particle irreversible positive electrode additive and a large-particle irreversible positive electrode additive having different average particle diameters at different locations within a positive electrode active material layer, thereby improving adhesive strength between a positive electrode current collector and a positive electrode active material layer, reducing mixture resistance and interfacial resistance, facilitating the discharge of gases generated during formation, reducing or suppressing the generation and accumulation of by-products, reducing the internal resistance measured after formation, and improving battery performance.

## BRIEF DESCRIPTION OF THE DRAWINGS

FIG. 1 to FIG. 4 are schematic views showing rechargeable lithium batteries according to some example embodiments.

FIG. 5 is a photograph of a cross-section of the positive electrode manufactured in Example 1 taken using a scanning electron microscope.

FIG. 6 is a photograph of a cross-section of the positive electrode manufactured in Comparative Example 1 taken using a scanning electron microscope.

FIG. 7 is a photograph of a cross-section of the positive electrode manufactured in Comparative Example 4 taken

using a scanning electron microscope.

## DETAILED DESCRIPTION

Hereinafter, example embodiments are described in detail so that those of ordinary skill in the art can readily implement the example embodiments. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" refers to a mixture, a laminate, a composite, a copolymer, an alloy, a blend, a reaction product, and the like of the constituents.

As used herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, and the like, are exaggerated for clarity, and like reference numerals designate like elements throughout the specification. It is understood that when an element such as a layer, film, region, or substrate is referred to as being "on" another element, it can be directly on the other element, or intervening elements may also be present. In contrast, when an element is referred to as being "directly on" another element, there are no intervening elements present therebetween.

In addition, "layer" herein includes not only a shape formed on the whole surface when viewed from a plan view, but also a shape formed on a partial surface.

The average particle diameter may be measured by a method known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. As used herein, when a definition is not otherwise provided, the average particle diameter ($D_{50}$) may mean a diameter of particles having a cumulative volume of 50 volume% in the particle size distribution. In addition, as used herein, when a definition is not otherwise provided, the average particle diameter ($D_{50}$) refers to a diameter of particles having a cumulative volume of 50 volume% in the particle size distribution that is obtained by measuring the size (diameter or long axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Positive Electrode

A positive electrode according to some example embodiments includes a positive electrode current collector, and a positive electrode active material layer on the positive electrode current collector. The positive electrode active material includes a first positive electrode active material layer adjacent to the positive electrode current collector, and a second positive electrode active material layer facing the positive electrode current collector with the first positive electrode active material layer interposed therebetween.

Here, "first" and "second" are only used to distinguish between irreversible positive electrode additives having different average particle diameters ($D_{50}$) and included at different locations in the positive electrode active material layer, and do not indicate a priority between the irreversible positive electrode additives.

Some of the lithium contained in the positive electrode active material participates in the formation of a solid electrolyte interface (SEI) film during charge and discharge, and is converted to irreversible lithium that no longer participates in the charge and discharge reaction. This may cause a challenge of reduced capacity of rechargeable lithium batteries. Accordingly, the above-described challenge may be addressed by including in the irreversible positive electrode additive a compound capable of compensating for irreversible lithium, e.g., a compound that may decompose in the formation process to provide lithium and acts as a sacrificial positive electrode that does not participate in subsequent charge/discharge (referred to as "irreversible positive electrode additive" in the present specification).

However, the irreversible positive electrode additive has a relatively larger particle size than the positive electrode active material, and the particles included in the irreversible positive electrode additive have different sizes, and thus the particles are distributed unevenly within the electrode plate, which lowers the electrical conductivity and makes initial activation challenging.

A positive electrode according to examples embodiments is capable of shortening the initial activation lead time by disposing a positive electrode active material layer (hereinafter referred to as a "first positive electrode active material layer") including a first irreversible positive electrode additive having a relatively large average particle diameter ($D_{50}$) (hereinafter the same as a "large-particle irreversible positive electrode additive") adjacent to a positive electrode current collector, and disposing a positive electrode active material layer (hereinafter referred to as a "second positive electrode active material layer") including a second irreversible positive electrode additive having a relatively small average particle diameter ($D_{50}$) (hereinafter the same as a "small-particle irreversible positive electrode additive") facing the positive electrode current collector, with the first positive electrode active material layer interposed therebetween. By disposing the first positive electrode active material layer including the large-particle irreversible positive electrode additive adjacent to the positive electrode current collector, the first positive electrode active material layer and the positive electrode current collector may have high adhesive strength, thereby inducing a reduction in the mixture resistance and interfacial resistance. In addition, by disposing the second positive electrode active material layer including the small-particle irreversible positive electrode additive further from the positive electrode current collector than the first positive electrode active material layer, that is, facing the positive electrode current collector with the first positive electrode active material layer interposed therebetween, discharge of gas generated during the formation may be facilitated, thereby reducing or suppressing the generation and accumulation of by-products.

Hereinafter, the positive electrode current collector and the positive electrode active material layer (first positive electrode active material layer and second positive electrode active material layer) included in the positive electrode are sequentially described.

Positive Electrode Current Collector

The positive electrode current collector is not particularly limited as long as the positive electrode current collector has conductivity and does not cause adverse chemical changes in the rechargeable lithium battery, and may be or include an aluminum foil or a stainless steel foil having a thickness in a range of about 10 μm to about 15 μm.

Positive Electrode Active Material Layer

The positive electrode active material layer is disposed on the positive electrode current collector, and includes a first positive electrode active material layer and a second positive electrode active material layer. Details regarding the first positive electrode active material layer and the second positive electrode active material layer are described below.

First Positive Electrode Active Material Layer:

The first positive electrode active material layer is disposed on the positive electrode current collector, and is simultaneously or contemporaneously disposed adjacent to the positive electrode current collector. Because the first positive electrode active material layer is located relatively lower within the positive electrode active material layer with respect to the positive electrode current collector, the first positive electrode active material layer may also be expressed as a positive electrode active material layer located at the lower portion.

The first positive electrode active material layer includes a first positive electrode active material and a first irreversible positive electrode additive. The first irreversible positive electrode additive may have a larger average particle diameter ($D_{50}$) than the second irreversible positive electrode additive included in the second positive electrode active material layer described below. The first irreversible positive electrode additive may be included in the positive electrode active material layer, and may play a sufficient role in compensating for irreversible lithium, thereby increasing the utilization rate of the positive electrode active material. For example, by including the first irreversible positive electrode additive in the first positive electrode active material layer adjacent to the positive electrode collector, the adhesion between the positive electrode collector and the first positive electrode active material layer may be improved, thereby reducing the mixture resistance and interfacial resistance between the positive electrode collector and the first positive electrode active material layer.

First, the first irreversible positive electrode additive is described.

The first irreversible positive electrode additive is in the form of particles, and the average particle diameter ($D_{50}$) thereof is larger than the average particle diameter ($D_{50}$) of the second irreversible positive electrode additive. The first irreversible positive electrode additive may be expressed as large particles.

The average particle diameter ($D_{50}$) of the first irreversible positive electrode additive may be in a range of about 5 μm to about 20 μm, for example, about 6 μm to about 18 μm, about 7 μm to about 16 μm, about 8 μm to about 14 μm, or about 10 μm to about 14 μm. The average particle diameter ($D_{50}$) of the first irreversible positive electrode additive may be obtained by measuring the size (diameter or the longest axis length) of about 20 random particles in a scanning electron microscope image to obtain a particle size distribution, and taking the diameter ($D_{50}$) of particles having a cumulative volume of 50 volume% in the particle size distribution as the average particle diameter. The first irreversible positive electrode additive may have a larger average particle diameter ($D_{50}$) than the second irreversible positive electrode

additive described below. By including a first irreversible positive electrode additive having an average particle diameter ($D_{50}$) that satisfies the above range and is larger than the average particle diameter ($D_{50}$) of the second irreversible positive electrode additive described below in the first positive electrode active material layer on the positive electrode current collector, the positive electrode active material may be sufficiently compensated for irreversible lithium, thereby increasing the utilization rate of the positive electrode active material, and improving the adhesive strength between the positive electrode current collector and the first positive electrode active material layer, and reducing mixture resistance and interfacial resistance.

A ratio of the average particle diameter ($D_{50}$) of the first irreversible positive electrode additive to the average particle diameter ($D_{50}$) of the second irreversible positive electrode additive may be greater than about 1 and less than or equal to about 10, for example, in a range of about 1.1 to about 9.5, about 1.5 to about 9, about 2 to about 7, about 2 to about 5, or about 2 to about 4. When the ratio of the average particle diameter of the first irreversible positive electrode additive to the average particle diameter of the second irreversible positive electrode additive satisfies the above range, the surface area that can react with the electrolyte solution increases, thereby improving the initial activation degree in the formation and facilitating the discharge of gases generated during formation.

The first irreversible positive electrode additive may include at least one of a lithium iron-based oxide, a lithium cobalt-based oxide, a lithium nickel-based oxide, or a combination thereof.

The lithium iron-based oxide may be or include at least one of $Li_5FeO_4$, $LiFeO_2$, $LiFe_5O_8$, or a combination thereof, and among these, using $Li_5FeO_4$ may provide a substantial amount of lithium in the formation process, which may substantially compensate for irreversible lithium, and thus substantially obtain the effect of the irreversible positive electrode additive.

The lithium cobalt-based oxide may be or include $Li_eCoO_4$, and the use of $Li_6CoO_4$ may provide a substantial amount of lithium in the formation process, which can substantially compensate for the irreversible lithium, and thus substantially obtain the effect of the irreversible positive electrode additive.

The lithium nickel-based oxide may be or include $Li_2NiO_2$, and the use of $Li_2NiO_2$ may provide a substantial amount of lithium in the formation process, which may consequently compensate for a substantial amount of irreversible lithium, and thus substantially obtain the effect of the irreversible positive electrode additive.

An amount of the first irreversible positive electrode additive may be in a range of about 0.1 wt% to about 3 wt% based on the total weight (100 wt%) of the first positive electrode active material layer. Based on the total weight of the first positive electrode active material layer (100 wt%), the lower limit of the amount of the first irreversible positive electrode additive may be about 0.3 wt%, about 0.5 wt%, about 0.7 wt%, about 0.9 wt%, about 1 wt%, about 1.2 wt%, about 1.4 wt%, about 1.6 wt%, about 1.7 wt%, or about 1.9 wt%, and the upper limit may be about 2.9 wt%, about 2.8 wt%, about 2.7 wt%, about 2.6 wt%, about 2.5 wt%, about 2.4 wt%, about 2.3 wt%, about 2.2 wt%, about 2.1 wt%, about 2 wt% or less, or about 1.95 wt% or less. The amount of the first irreversible positive electrode additive may be equal to or greater than any one of the lower limits described above, and may be equal to or less than any one of the upper limits described above. When the amount of the first irreversible positive electrode additive satisfies the above range, the first irreversible positive electrode additive may play a sufficient role in compensating for irreversible lithium, thereby increasing the utilization rate of the positive electrode active material, and may improve the adhesive strength between the positive electrode current collector and the first positive electrode active material layer, and reduce mixture resistance and interfacial resistance.

Next, the first positive electrode active material is described.

The first positive electrode active material is included in the first positive electrode active material layer, and is referred to as 'first positive electrode active material' to distinguish it from the positive electrode active material included in the second positive electrode active material layer. As for the first positive electrode active material, any material commonly used in rechargeable lithium batteries may be included without limitation. For example, the first positive electrode active material may be or include a compound capable of intercalating and deintercalating lithium. For example, the first positive electrode active material includes a lithium transition metal composite oxide, and examples of the lithium transition metal composite oxide may include at least one of a lithium nickel-based oxide, a lithium cobalt-based oxide, a lithium manganese-based oxide, a lithium iron phosphate-based compound, a cobalt-free lithium nickel-manganese-based oxide, a lithium-manganese-rich compound, or a combination thereof.

As an example, a compound represented by any of the following chemical formulas may be used. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_{d-}GeO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); $Li_aFePO_4$ ($0.90 \leq a \leq 1.8$).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The first positive electrode active material may include, for example, at least one of a lithium nickel-based oxide represented by Chemical Formula 11, a lithium cobalt-based oxide represented by Chemical Formula 12, a lithium iron phosphate-based compound represented by Chemical Formula 13 or Chemical Formula 14, a cobalt-free lithium nickel-manganese-based oxide represented by Chemical Formula 15, or a combination thereof.

Chemical Formula 11: $Li_{a11}Ni_{x11}M^{11}_{y11}M^{12}_{z11}O_{2-b11}X_{b11}$.

In Chemical Formula 11, $0.9 \le a11 \le 1.8$, $0.3 \le x11 \le 1$, $0 \le y11 \le 0.7$, $0 \le z11 \le 0.7$, $0.9 \le x11+y11+z11 \le 1.1$, and $0 \le b11 \le 0.1$, $M^{11}$ and $M^{12}$ each independently is or includes at least one of Al, B, Ba, Ca, Ce, Co, Cr, Cu, Fe, Mg, Mn, Mo, Nb, Si, Sn, Sr, Ti, V, W, Y, Zr, or a combination thereof, and X is or includes at least one of F, P, S, or a combination thereof. $M^{11}$ and $M^{12}$ may be different elements.

In Chemical Formula 11, $0.6 \le x11 \le 1$, $0 \le y11 \le 0.4$, and $0 \le z11 \le 0.4$, or $0.8 \le x11 \le 1$, $0 \le y11 \le 0.2$, and $0 \le z11 \le 0.2$.

Chemical Formula 12: $Li_{a12}Co_{x12}M^{13}_{y12}O_{2-b12}X_{b12}$.

In Chemical Formula 12, $0.9 \le a12 \le 1.8$, $0.7 \le x12 \le 1$, $0 \le y12 \le 0.3$, $0.9 \le x12+y12 \le 1.1$, and $0 \le b12 \le 0.1$, $M^{13}$ is or includes at least one of Al, B, Ba, Ca, Ce, Cr, Cu, Fe, Mg, Mn, Mo, Ni, Se, Si, Sn, Sr, Ti, V, W, Y, Zn, Zr, or a combination thereof, and X is or includes at least one of F, P, S, or a combination thereof.

Chemical Formula 13: $Li_{a13}Fe_{(1-x13)}M^{14}_{x13}PO_4$.

In Chemical Formula 13, $0.90 \le a13 \le 1.5$, $0 \le x13 \le 0.4$, and $M^{14}$ is or includes at least one of Al, B, Ca, Ce, Cr, Cu, La, Mg, Mn, Mo, Nb, Ni, Si, Sn, Sr, Ti, V, W, Y, Zn, Zr, or a combination thereof. Here, $0.90 \le a13 \le 1.5$, for example $0.90 \le a13 \le 1.2$, or $0.95 \le a13 \le 1.1$. Additionally, $0 \le x13 \le 0.4$, $0 \le x13 \le 0.3$, $0 \le x13 \le 0.2$, $0 \le x13 \le 0.1$, or $0 \le x13 \le 0.05$.

Chemical Formula 14: $Li_{a14}Mn_{x14}Fe_{(1-x14-y14)}M^{15}_{y14}PO_4$.

In Chemical Formula 14, $0.90 \le a14 \le 1.5$, $0.1 \le x14 \le 0.9$, $0 \le y14 \le 0.9$, and $M^{15}$ is or includes at least one of Al, B, Ca, Ce, Cr, Cu, La, Mg, Mo, Nb, Ni, Si, Sn, Sr, Ti, V, W, Y, Zn, Zr, or a combination thereof. Here, $0.90 \le a14 \le 1.5$, for example $0.90 \le a14 \le 1.2$, or $0.95 \le a14 \le 1.1$. Additionally, $0.1 \le x14 \le 0.9$, $0.3 \le x14 \le 0.9$, or $0.4 \le x14 \le 0.8$, and $0 \le y14 \le 0.4$, $0 \le y14 \le 0.3$, $0 \le y14 \le 0.2$, $0 \le y14 \le 0.1$, or $0 \le y14 \le 0.05$.

Chemical Formula 15: $Li_{a15}Ni_{x15}Mn_{y15}M^{16}_{z15}O_{2-b15}X_{b15}$.

In Chemical Formula 15, $0.9 \le a15 \le 1.8$, $0.8 \le x15 < 1$, $0 < y15 \le 0.2$, $0 \le z15 \le 0.2$, $0.9 \le x15+y15+z15 \le 1.1$, and $0 \le b15 \le 0.1$, $M^{16}$ is or includes at least one of Al, B, Ba, Ca, Ce, Cr, Cu, Fe, Mg, Mo, Nb, Si, Sn, Sr, Ti, V, W, Y, Zn, Zr, or a combination thereof, and X is or includes at least one of F, P, S, or a combination thereof.

For example, the first positive electrode active material may include a lithium iron phosphate-based compound, and the lithium iron phosphate-based compound may improve heat resistance and thermal stability, while also increasing capacity or increasing output. For example, the lithium iron phosphate-based compound may be represented by Chemical Formula 13 or Chemical Formula 14. For example, $M^{14}$ and $M^{15}$ of Chemical Formula 13 may each independently include at least one of Al, Mg, Ti, V, or a combination thereof.

For example, the lithium iron phosphate-based compound may include at least one of $LiFePO_4$, $LiMn_{0.7}Fe_{0.3}PO_4$, $LiMn_{0.6}Fe_{0.4}PO_4$, $LiMn_{0.5}Fe_{0.5}PO_4$, $LiMn_{0.4}Fe_{0.6}PO_4$, $LiMn_{0.3}Fe_{0.7}PO_4$, or a combination thereof.

The first positive electrode active material including the lithium iron phosphate-based compound is in the form of particles, and the average particle diameter ($D_{50}$) of the particles may be in a range of about 0.01 μm to about 2 μm, for example, about 0.1 μm to about 1 μm, or about 0.2 μm to about 0.9 μm. Here, the average particle diameter ($D_{50}$) may be obtained by randomly measuring the size (diameter or long axis length) of about 20 particles from a scanning electron microscope image of the positive electrode active materials to obtain a particle size distribution, and taking the diameter of the particles having a cumulative volume of 50 volume% from the particle size distribution as the average particle diameter.

In some example embodiments, the lithium iron phosphate-based compound may be in the form of first particles, second particles, or a mixture of first particles and second particles.

The first particles may be or include a secondary particle formed by agglomerating plurality of primary particles. The secondary particles may be expressed as an assembly. The secondary particles of the first particles may have a spherical or ellipsoidal shape as the primary particles are closely agglomerated with each other. The average particle diameter ($D_{50}$) of the secondary particles of the first particles may be, for example, in a range of about 5 μm to about 20 μm, about 6 μm to about 20 μm, or about 6 μm to about 15 μm. The average particle diameter ($D_{50}$) of the secondary particles of the first particle may be larger than the average particle diameter ($D_{50}$) of the single particles of the second particle

described below. The average particle diameter ($D_{50}$) of the primary particles forming the secondary particles of the first particles may be, for example, in a range of about 0.01 μm to about 2 μm, about 0.01 μm to about 1.2 μm, or about 0.05 μm to about 0.9 μm, and for example, about 10 nm to about 400 nm, about 20 nm to about 300 nm, or about 50 nm to about 200 nm. For example, the average particle diameter ($D_{50}$) of the first particles may be obtained by randomly selecting about 20 first particles from an electron microscope image of a lithium iron phosphate-based compound, measuring the particle diameter, and taking the diameter of the particles having a cumulative volume of 50 volume% from the particle size distribution as the average particle diameter. The average particle diameter ($D_{50}$) of the primary particles forming the secondary particles of the first particles may be obtained by measuring the sizes of about 20 primary particles in an electron microscope image of the surface or cross-section of the first particle and taking the diameter of the particles having a cumulative volume of 50 volume% in the particle size distribution as the average particle diameter.

The secondary particles of the first particles may include pores therein, and the void ratio may be in a range of about 20% to about 50%. The porosity may be obtained by measuring a ratio of an area of the portion occupied by the pores within the secondary particle to the cross-sectional area of the secondary particle using an image analysis program such as Image J, for example, from a scanning electron microscope image of the cross-section of the first particle.

The second particles may have the form of a single particle. An average particle diameter ($D_{50}$) of the second particles may be less than or equal to about 2 μm, for example, in a range of about 0.5 μm to about 2 μm, about 0.5 μm to about 1.5 μm, about 0.6 μm to about 1.2 μm, or about 0.8 μm to about 1.0 μm. The average particle diameter ($D_{50}$) of the single particles of the second particles may be smaller than the average particle diameter ($D_{50}$) of the secondary particles of the first particles, and may be equal to or larger than the average particle diameter ($D_{50}$) of the primary particles forming the secondary particles of the first particles. The average particle diameter ($D_{50}$) of the second particles may be, for example, obtained by randomly selecting about 20 second particles from an electron microscope image of a lithium iron phosphate-based compound, measuring their particle diameters, and taking the diameter of particles having a cumulative volume of 50 volume% from the particle size distribution as the average particle diameter.

Based on 100 wt% of the first positive electrode active material including the lithium iron phosphate-based compound, an amount of the first particles may be in a range of about 20 wt% to about 90 wt% and an amount of the second particles may be about 10 wt% to about 80 wt%, for example, the amount of the first particles may be in a range of about 40 wt% to about 80 wt% and the amount of the second particles may be in a range of about 20 wt% to about 60 wt%, or the amount of the first particles may be in a range of about 40 wt% to about 60 wt% and the amount of the second particles may be in a range of about 40 wt% to about 60 wt%. If (when) the mixing ratio of the first particles and the second particles satisfies the above range, the positive electrode including the first particles and the second particles may have improved energy density and achieve high charge/discharge capacity and efficiency and cycle-life characteristics.

The lithium iron phosphate-based compound may further include a carbon coating layer on the particle surface. For example, the first particles may further include a carbon coating layer on the surface of the secondary particle and/or on the surface of the primary particles forming the secondary particle. Additionally, the second particles may further include a carbon coating layer on the surface of the single particle. The carbon coating layer may improve the electrical conductivity of the lithium iron phosphate-based compound and reduce the resistance of the positive electrode. The carbon coating layer may include amorphous carbon, crystalline carbon, or a combination thereof. The carbon coating layer may be formed using a carbon raw material including, for example, at least one of glucose, sucrose, lactose, starch, oligosaccharide, polyoligosaccharide, fructose, cellulose, a polymer of furfuryl alcohol, a block copolymer of ethylene and ethylene oxide, a vinyl resin, a cellulose resin, a phenolic resin, a pitch resin, a tar resin, or a combination thereof. For example, the carbon coating layer may be formed by arranging the carbon raw materials on the surface of the lithium iron phosphate-based compound particles, and then performing a firing process. For example, the carbon raw material and the primary particles including the lithium iron phosphate-based compound may be mixed and fired to form a carbon coating layer on the surfaces of the primary particles, and then secondary particles in which the primary particles are agglomerated may be prepared through a post-process, or the carbon raw material and the secondary particles may be mixed and fired to form a carbon coating layer on the surfaces of the secondary particles. Alternatively, the carbon raw material and the single particles including the lithium iron phosphate-based compound may be mixed and fired to form a carbon coating layer located on the surface of the single particles.

The first positive electrode active material may be included in an amount in a range of about 60 wt% to about 99.9 wt%, about 70 wt% to about 99.8 wt%, about 80 wt% to about 99 wt%, or about 90 wt% to about 98 wt% based on a total weight (100 wt%) of the first positive electrode active material layer.

The first positive electrode active material layer may optionally further include a binder, a conductive material, or a combination thereof, together with the first positive electrode active material and the first irreversible positive electrode additive.

The binder adheres the positive electrode active material particles to each other, and adheres the positive electrode active material to the current collector. Examples of the binder may include at least one of polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene,

polyvinylidene fluoride, polyethylene, polypropylene, a styrene-butadiene rubber, a (meth)acrylated styrene-butadiene rubber, an epoxy resin, a (meth)acrylic resin, polyester resin, nylon, and the like, but are not limited thereto.

The conductive material is included to provide electrode conductivity, and any electrically conductive material may be used as a conductive material unless electrically conductive material causes an adverse chemical change. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

An amount of the binder in the first positive electrode active material layer may be approximately in a range of about 0.1 wt% to about 5 wt% based on a total weight (100 wt%) of the first positive electrode active material layer, and an amount of the conductive material may be in a range of about 0.1 wt% to about 5 wt% based on a total weight (100 wt%) of the first positive electrode active material layer.

A thickness of the first positive electrode active material layer is not specifically limited, but may be in a range of about 20 μm to about 300 μm. For example, the thickness of the first positive electrode active material layer may be greater than or equal to about 20 μm, greater than or equal to about 25 μm, or greater than or equal to about 30 μm, or less than or equal to about 250 μm, less than or equal to about 200 μm, less than or equal to about 150 μm, less than or equal to about 100 μm, or less than or equal to about 50 μm, and may be about 20 μm to about 200 μm, or about 25 μm to about 100 μm. The thickness of the first positive electrode active material layer may be measured through scanning electron microscope (SEM) images of a cross-section of the compressed positive electrode.

A loading level of the first positive electrode active material layer per unit area of the positive electrode current collector is not specifically limited, but may be, for example, in a range of about 10 mg/cm$^2$ to about 30 mg/cm$^2$. The loading level of the first positive electrode active material layer per unit area of the positive electrode current collector may be in a range of about 15 mg/cm$^2$ to about 25 mg/cm$^2$, about 10 mg/cm$^2$ to about 20 mg/cm$^2$, or about 15 mg/cm$^2$ to about 18 mg/cm$^2$.

The first positive electrode active material layer may be formed relatively densely, and may have a porosity of, for example, less than about 10%. For example, the porosity of the first positive electrode active material layer may be less than or equal to about 9%, less than or equal to about 8%, less than or equal to about 7%, less than or equal to about 6%, or less than or equal to about 5%, or may be greater than or equal to about 0%, greater than or equal to about 1%, greater than or equal to about 2%, or greater than or equal to about 3%. The porosity may be a value measured after coating the first positive electrode active material layer on the positive electrode current collector, coating the second positive electrode active material layer, and then drying and compressing. The porosity may be obtained by photographing a compressed positive electrode cross-section with an optical microscope such as a scanning electron microscope (SEM) and measuring a ratio of an area of the portion occupied by the pores within the first positive electrode active material layer to the cross-sectional area of the first positive electrode active material layer using an image analysis program such as Image J. When the porosity of the first positive electrode active material layer satisfies the above range, the adhesive strength between the positive electrode current collector and the first active material layer increases, and a reduction in the mixture resistance and interfacial resistance is induced, thereby improving the quality of the electrode plate and battery performance.

Second Positive Electrode Active Material Layer:

The second positive electrode active material layer is disposed on the positive electrode current collector, and also faces the positive electrode current collector with the first positive electrode active material layer interposed therebetween. Because the second positive electrode active material layer is located relatively higher within the positive electrode active material layer with respect to the positive electrode current collector, the second positive electrode active material layer may also be expressed as a positive electrode active material layer located at the upper portion.

The second positive electrode active material layer includes a second positive electrode active material and a second irreversible positive electrode additive. The second irreversible positive electrode additive has a smaller average particle diameter ($D_{50}$) than the first irreversible positive electrode additive. The second irreversible positive electrode additives may be included in the positive electrode active material layer to sufficiently play a role in compensating for irreversible lithium, thereby increasing the utilization rate of the positive electrode active material. For example, by including the second irreversible positive electrode additive in the second positive electrode active material layer located far from the positive electrode current collector, the gas generated during formation may be readily discharged and the resulting generation and accumulation of by-products may be reduced or suppressed, thereby lowering the internal resistance measured after formation.

First, the second irreversible positive electrode additive is described.

The second irreversible positive electrode additive is in the form of particles, and the average particle diameter ($D_{50}$) thereof is smaller than the average particle diameter ($D_{50}$) of the first irreversible positive electrode additive. In this case, the second irreversible positive electrode additive may be represented as small particles.

The average particle diameter ($D_{50}$) of the second irreversible positive electrode additive may be less than about 5 μm, for example, in a range of about 0.1 μm to about 4.8 μm, about 0.5 μm to about 4.6 μm, about 1 μm to about 4.4 μm,

about 1.5 μm to about 4.2 μm, or about 1.8 μm to about 4 μm. The average particle diameter ($D_{50}$) of the second irreversible positive electrode additive may be obtained by measuring the size (diameter or the longest axis length) of about 20 random particles in a scanning electron microscope image to obtain a particle size distribution, and taking the diameter of particles having a cumulative volume of 50 volume% in the particle size distribution as the average particle diameter. By including a second irreversible positive electrode additive having an average particle diameter ($D_{50}$) smaller than an average particle diameter of the first irreversible positive electrode additive described above while meeting the above range in the second positive electrode active material layer on the first positive electrode active material layer, the irreversible lithium is sufficiently compensated for, thereby increasing the utilization rate of the positive electrode active material, and gas discharge generated during formation is facilitated and the generation and accumulation of by-products caused by the same may be reduced or suppressed, thereby lowering the internal resistance measured after formation.

The second irreversible positive electrode additive may include at least one of a lithium iron-based oxide, a lithium cobalt-based oxide, a lithium nickel-based oxide, or a combination thereof. Their specific types are the same as the types described above with respect to the first irreversible positive electrode additive.

The second irreversible positive electrode additive may be the same as or different from the first irreversible positive electrode additive, and for example, the same one may be used.

An amount of the second irreversible positive electrode additive may be in a range of about 0.1 wt% to about 3 wt%, for example, about 0.3 wt% to about 2.7 wt%, about 0.5 wt% to about 2.5 wt%, about 0.7 wt% to about 2.3 wt%, about 0.9 wt% to about 2.1 wt%, or about 1 wt% to about 2 wt% based on the total weight (100 wt%) of the second positive electrode active material layer. When the amount of the second irreversible positive electrode additive satisfies the above range, the second irreversible positive electrode additive may sufficiently play a role in compensating for irreversible lithium, thereby increasing the utilization rate of the positive electrode active material, and may facilitate the discharge of gas generated during formation and reduce or suppress the generation and accumulation of by-products, thereby lowering the internal resistance measured after formation.

A weight ratio of the first irreversible positive electrode additive and the second irreversible positive electrode additive may be in a range of about 0.5:9.5 to about 9.5:0.5, about 1:9 to about 9:1, about 2:8 to about 8:2, about 3:7 to about 7:3, or about 4:6 to about 6:4.

Next, the second positive electrode active material is described.

The second positive electrode active material is a positive electrode active material included in the second positive electrode active material layer, and is referred to as 'second positive electrode active material' to be distinguished from the positive electrode active material included in the first positive electrode active material layer. The second positive electrode active material may be used without limitation as long as the second positive electrode active material is used in a rechargeable lithium battery as described in the above first positive electrode active material. As for the second positive electrode active material, the same materials described for the first positive electrode active material may be used, and thus are omitted below. The second positive electrode active material may be the same as, or different from, the first positive electrode active material, and for example, the same material may be used.

The second positive electrode active material may be included in an amount in a range of about 60 wt% to about 99.9 wt%, about 70 wt% to about 99.8 wt%, about 80 wt% to about 99 wt%, or about 90 wt% to about 98 wt% based on the total weight (100 wt%) of the second positive electrode active material layer.

The second positive electrode active material layer may optionally further include a binder, a conductive material, or a combination thereof, together with the second positive electrode active material and the second irreversible positive electrode additive.

The types of the binder and conductive material are the same as the types of binder and conductive material described with respect to the first positive electrode active material layer.

The binder and conductive material may be the same or different from the binder and conductive material used in the first positive electrode active material layer, and for example, the same binder and conductive material may be included.

In the second positive electrode active material layer, an amount of the binder may be approximately in a range of about 0.1 wt% to about 5 wt% based on the total weight (100 wt%) of the second positive electrode active material layer, and the content of the conductive material may be in a range of about 0.1 wt% to about 5 wt% based on the total weight (100 wt%) of the second positive electrode active material layer.

A thickness of the second positive electrode active material layer is not specifically limited, but may be in a range of about 20 μm to about 300 μm. For example, the thickness of the second positive electrode active material layer may be greater than or equal to about 20 μm, greater than or equal to about 25 μm, or greater than or equal to about 30 μm, and less than or equal to about 250 μm, less than or equal to about 200 μm, less than or equal to about 150 μm, less than or equal to about 100 μm, or less than or equal to about 50 μm, and may be in a range of about 20 μm to about 200 μm, about 25 μm to about 100 μm, or about 30 μm to about 50 μm. The thickness of the second positive electrode active material layer can be measured through scanning electron microscope (SEM) images of a cross-section of the compressed positive electrode.

A ratio of the thicknesses of the first positive electrode active material layer and the second positive electrode active material layer is not specifically limited, but may be, for example, in a range of about 0.5:9.5 to about 9.5:0.5, about 2:8 to about 8:2, about 3:7 to about 7:3, or about 4:6 to about 6:4.

A loading level of the second positive electrode active material layer per unit area of the first positive electrode active material layer is not specifically limited, but may be, for example, in a range of about 10 $mg/cm^2$ to about 40 $mg/cm^2$. The loading level of the second positive electrode active material layer per unit area of the first positive electrode active material layer may be in a range of about 15 $mg/cm^2$ to about 25 $mg/cm^2$, about 10 $mg/cm^2$ to about 20 $mg/cm^2$, or about 15 $mg/cm^2$ to about 18 $mg/cm^2$.

The second positive electrode active material layer may have a porosity that is greater than or equal to about 10%, for example, about 10% to about 50%, about 10% to about 40%, about 10% to about 30%, or about 10% to about 20%. The porosity may be measured after coating the first positive electrode active material layer on the positive electrode current collector, coating a second positive electrode active material layer on the first positive electrode active material layer, and then drying and compressing these positive electrode active material layers (the first positive electrode active material layer and the second positive electrode active material layer). The porosity may be obtained by photographing a compressed positive electrode cross-section with an optical microscope such as a scanning electron microscope (SEM) and measuring a ratio of an area of the portion occupied by the pores to the cross-sectional area of the second positive electrode active material layer within the second positive electrode active material layer using an image analysis program such as Image J. The second positive electrode active material layer may have a porosity that satisfies the above range by including the aforementioned small-particle irreversible positive electrode additive, e.g., the second irreversible positive electrode additive. In this case, the second positive electrode active material layer has a relatively high porosity compared to the first positive electrode active material layer, so that gas generated during formation may be readily discharged, and the generation and accumulation of by-products may be reduced or suppressed, and as a result, the internal resistance measured after formation may be lowered.

Method for Manufacturing Positive Electrode

The positive electrode may be manufactured according to a known method. For example, the positive electrode may be manufactured by a method of forming the first positive electrode active material layer and the second positive electrode active material layer on one surface alone of the positive electrode current collector, or by a method of forming the first positive electrode active material layer and the second positive electrode active material layer on both surfaces of the positive electrode current collector.

For example, the positive electrode may be manufactured by forming a first positive electrode active material layer on each surface of a positive electrode current collector, and then forming a second positive electrode active material layer on each of the first positive electrode active material layers. In this case, a positive electrode current collector, a composition for forming a first positive electrode active material layer, and a composition for forming a second positive electrode active material layer are prepared, and the positive electrode current collector, the first positive electrode active material layer, and the second positive electrode active material layer are disposed, e.g., sequentially disposed, by simultaneously or contemporaneously coating the composition for forming the first positive electrode active material layer and the composition for forming the second positive electrode active material layer using a double slot die coating device, and then drying and compressing them all at once to produce the positive electrode.

The composition for forming the first positive electrode active material layer may be prepared by mixing the first positive electrode active material, the first irreversible positive electrode additive, and optionally a binder, a conductive agent, or a combination thereof to form a mixture, and dispersing the mixture in a solvent.

The composition for forming the second positive electrode active material layer may be prepared by mixing a second positive electrode active material, a second irreversible positive electrode additive, and optionally a binder, a conductive agent, or a combination thereof to form a mixture, and dispersing the mixture in a solvent.

The solvents used above include N-methylpyrrolidone (NMP), acetone, water, and the like, but are not necessarily limited to these, and any solvent used in the relevant technical field may be used.

**Rechargeable Lithium Battery**

A rechargeable lithium battery according to some example embodiments includes the aforementioned positive electrode, a negative electrode, and an electrolyte. The rechargeable lithium battery may improve cycle-life by including the aforementioned positive electrode, while also shortening the initial activation lead time in the formation step, facilitating the discharge of gases generated during the formation step, thereby reducing by-products caused by reaction with the electrolyte solution, and improving an adhesive strength between the positive electrode current collector and the positive electrode active material layer and reducing the interfacial resistance, thereby improving battery performance.

The rechargeable lithium battery may include a positive electrode, a negative electrode, a separator between the

positive electrode and the negative electrode, and an electrolyte.

In some example embodiments, an all-solid-state rechargeable battery including the positive electrode, the negative electrode, and a solid electrolyte layer between the positive electrode and the negative electrode are described.

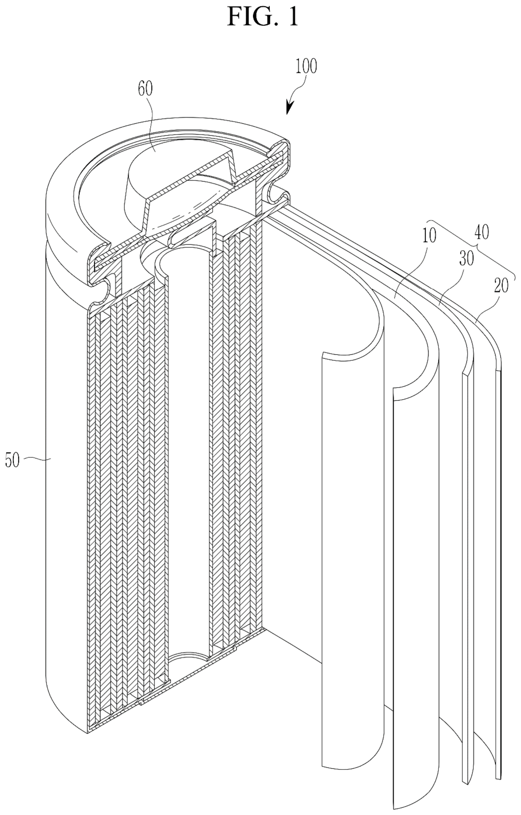

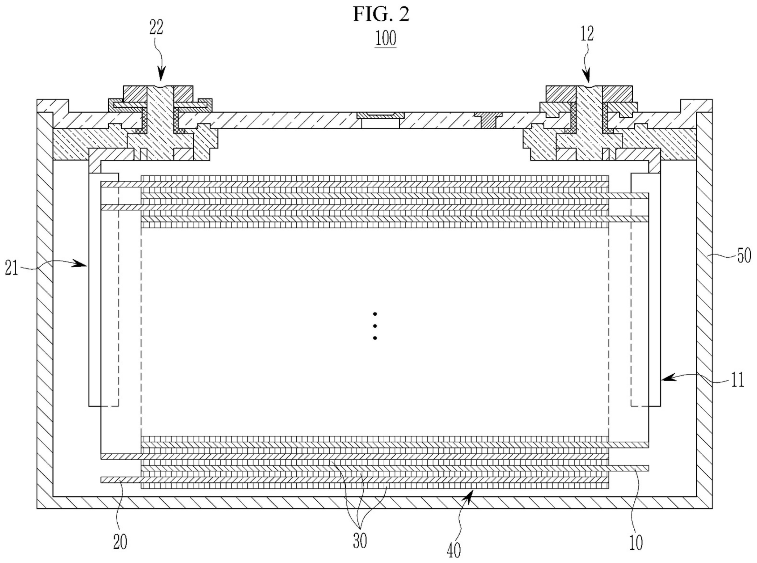

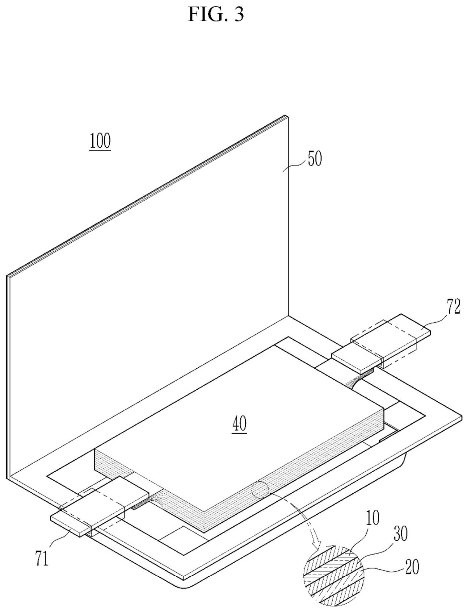

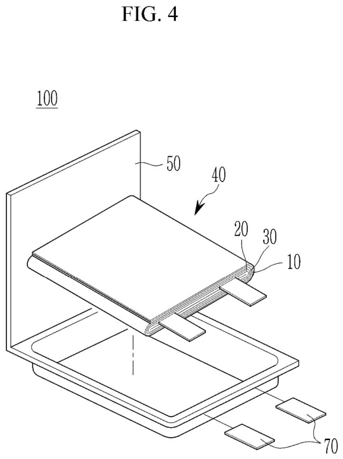

The rechargeable lithium battery may be classified into cylindrical, prismatic, pouch, coin, and the like depending on the shape thereof. FIG. 1 to FIG. 4 are schematic diagrams showing the rechargeable lithium battery according to some example embodiments, where FIG. 1 is a cylindrical battery, FIG. 2 is a prismatic battery, and FIG. 3 and FIG. 4 are a pouch-shaped battery. Referring to FIG. 1 to FIG. 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIG. 3 and FIG. 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electric path for inducing the current formed in the electrode assembly 40 to the outside of the rechargeable lithium battery 100.

Hereinafter, each component that constitutes a rechargeable lithium battery is described.

The positive electrode is the same as described above, so the description therefor is omitted, and the negative electrode, electrolyte, and separator are described sequentially.

## Negative Electrode

A negative electrode for a rechargeable lithium battery includes a negative current collector, and a negative electrode active material layer on the negative current collector. The negative electrode active material layer includes a negative electrode active material, and may optionally further include a binder, a conductive material, or a combination thereof.

The negative electrode active material includes at least one of a material capable of reversibly intercalating/-deintercalating lithium ions, lithium metal, an alloy of lithium metal, a material capable of doping and dedoping lithium, or a transition metal oxide.

The material capable of reversibly intercalating/deintercalating the lithium ions may be or include a carbon-based negative electrode active material, for example, crystalline carbon, amorphous carbon, or a combination thereof. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

As the above lithium metal alloy, lithium and at least one of Na, K, Rb, Cs, Fr, Be, Mg, Ca, Sr, Si, Sb, Pb, In, Zn, Ba, Ra, Ge, Al, Sn, or a combination thereof may be used.

The material capable of doping/dedoping lithium may be or include a Si-based negative electrode active material or a Sn-based negative electrode active material. The Si-based negative electrode active material may be or include at least one of silicon, a silicon-carbon composite, $SiO_x$ ($0<x\leq2$), a Si-Q alloy (wherein Q is or includes at least one of an alkali metal, an alkaline earth metal, a Group 13 element, a Group 14 element (excluding Si), a Group 15 element, a Group 16 element, a transition metal, a rare earth element, or a combination thereof, and may be or include for example, at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof), or a combination thereof. The Sn-based negative electrode active material may be or include at least one of Sn, $SnO_2$, a Sn alloy, or a combination thereof.

The silicon-carbon composite may be or include a composite of silicon and amorphous carbon. The average particle diameter ($D_{50}$) of the silicon-carbon composite particles may be, for example, in a range of about 0.5 μm to about 20 μm. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be or include artificial graphite, natural graphite, or a combination thereof. The amorphous carbon may include at least one of soft carbon or hard carbon, a mesophase pitch carbonized product, calcined coke, and the like.

When the silicon-carbon composite includes silicon and amorphous carbon, an amount of the silicon may be in a

range of about 10 wt% to about 50 wt%, and an amount of the amorphous carbon may be in a range of about 50 wt% to about 90 wt% based on 100 wt% of the silicon-carbon composite. In addition, when the composite includes silicon, amorphous carbon, and crystalline carbon, an amount of silicon may be in a range of about 10 wt% to about 50 wt%, an amount of crystalline carbon may be in a range of about 10 wt% to about 70 wt%, and an amount of amorphous carbon may be in a range of about 20 wt% to about 40 wt% based on 100 wt% of the silicon-carbon composite.

Additionally, a thickness of the amorphous carbon coating layer may be in a range of about 5 nm to about 100 nm. An average particle diameter ($D_{50}$) of the silicon particles (primary particles) may be in a range of about 10 nm to about 1 μm, or about 10 nm to about 200 nm. The silicon particles may be present as silicon alone, in the form of a silicon alloy, or in an oxidized form. The oxidized form of the silicon may be represented as $SiO_x$ ($0<x\leq2$). At this time, the atomic content ratio of Si:O, which indicates the degree of oxidation, may be in a range of about 99:1 to about 33:67. As used herein, when a definition is not otherwise provided, an average particle diameter ($D_{50}$) indicates a diameter of a particle where a cumulative volume is about 50 volume% in a particle size distribution.

The Si-based negative electrode active material or Sn-based negative electrode active material may be mixed with the carbon-based negative electrode active material. When the Si-based negative electrode active material or the Sn-based negative electrode active material and the carbon-based negative electrode active material are mixed together, the mixing ratio may be a weight ratio in a range of about 1:99 to about 90:10.

The negative electrode active material may be included in an amount in a range of about 90 wt% to about 99.8 wt%, or about 94 wt% to about 99 wt%, based on 100 wt% of the negative electrode active material layer.

The binder may adhere the negative electrode active material particles to each other, and may adhere the negative electrode active material to the current collector. The binder may be or include a non-aqueous binder, an aqueous binder, a dry binder, or a combination thereof.

The non-aqueous binder may include at least one of polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder may be or include a polymer material capable of becoming fiber, and may be or include, for example, at least one of polytetrafluoroethylene, polyvinylidene fluoride, a vinylidene fluoride-hexafluoropropylene copolymer, polyethylene oxide, or a combination thereof.

The conductive material is included to provide electrode conductivity, and any electrically conductive material may be used as a conductive material unless the electrically conductive material causes a chemical change. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

An amount of the binder may be in a range of about 0.1 wt% to about 5 wt% based on 100 wt% of the negative electrode active material layer, and an amount of the conductive material may be in a range of about 0.1 wt% to about 5 wt% based on 100 wt% of the negative electrode active material layer.

The negative electrode current collector is not particularly limited as long as the negative electrode current collector has conductivity without causing adverse chemical changes in the rechargeable lithium battery, and may be or include a copper foil having a thickness in a range of about 10 μm to about 15 μm.

Electrolyte

For example, an electrolyte for a rechargeable lithium battery may be or include an electrolyte solution, and includes a non-aqueous organic solvent and a lithium salt.

The non-aqueous organic solvent constitutes a medium for transmitting ions taking part in the electrochemical reaction of a battery. The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC),

ethylene carbonate (EC), propylene carbonate (PC), butylene carbonate (BC), and the like. The ester-based solvent may include at least one of methyl acetate, ethyl acetate, n-propyl acetate, t-butyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, and may include a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone, or in combination of two or more solvents, and when two or more types of solvent are used in combination, the mixing ratio may be appropriately adjusted depending on intended battery performances, which is widely understood by those working in the relevant field.

When using a carbonate-based solvent, a cyclic carbonate and a chain carbonate may be mixed together, and the cyclic carbonate and the chain carbonate may be mixed in a volume ratio in a range of about 1:1 to about 1:9.

The non-aqueous organic solvent may further include an aromatic hydrocarbon-based organic solvent. For example, a carbonate-based solvent and an aromatic hydrocarbon-based organic solvent may be mixed together in a volume ratio in a range of about 1:1 to about 30:1.

The electrolyte solution may further include at least one of vinylethylene carbonate, vinylene carbonate, or an ethylene carbonate-based compound to improve battery cycle-life.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, and the like.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_2C_2F_5)_2$, $Li(FSO_2)_2N$ (lithium bis(fluorosulfonyl) imide; LiFSI), $LiC_4F_9SO_3$, $LiN(C_xF_{2x+1}SO_2)(C_yF_{2y+1}SO_2)$ (wherein x and y are integers in a range of 1 to 20), lithium trifluoromethane sulfonate, lithium tetrafluoroethane sulfonate, lithium difluorobis(oxalato) phosphate (LiDFBOP), lithium bis(oxalato) borate (LiBOB), or a combination thereof.

A concentration of lithium salt may be within the range of about 0.1 M to about 2.0 M. When the concentration of lithium salt is within the above range, the electrolyte solution has appropriate ionic conductivity and viscosity, and thus desired or improved performance can be achieved and lithium ions can move effectively.

Separator

Depending on the type of rechargeable lithium battery, a separator may be present between the positive and negative electrodes. For example, the separator may include at least one of polyethylene, polypropylene, polyvinylidene fluoride, or a multilayer film of two or more layers, and may be a mixed multilayer film such as a polyethylene/polypropylene two-layer separator, a polyethylene/polypropylene/polyethylene three-layer separator, or a polypropylene/polyethylene/polypropylene three-layer separator.

The separator may include a porous substrate and a coating layer including an organic material, an inorganic material, or a combination thereof on one surface, or on both surfaces, of the porous substrate.

The porous substrate may be or include a polymer film formed of or including any one polymer including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene(for example, TEFLON®), or a copolymer or mixture of two or more thereof.

The porous substrate may have a thickness in a range of about 1 μm to about 40 μm, for example, about 1 μm to about 30 μm, about 1 μm to about 20 μm, about 5 μm to about 15 μm, or about 10 μm to about 15 μm.

The organic material may include a (meth)acrylic copolymer including a first structural unit derived from (meth) acrylamide, and a second structural unit including at least one of a structural unit derived from (meth)acrylic acid or (meth) acrylate, and a structural unit derived from (meth)acrylamidosulfonic acid or a salt thereof.

The inorganic material may include at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but is not limited thereto. The inorganic material may be in the form of particles, for example, inorganic particles. The average particle diameter ($D_{50}$) of the inorganic particles may be in a range of about 1 nm to about 2000 nm, for example, about 100 nm to about 1000 nm, or about 100 nm to about 700 nm.

The organic material and the inorganic material may be mixed in one coating layer, or a coating layer including an

organic material and a coating layer including an inorganic material may be stacked together.

A thickness of the coating layer may be in a range of about 0.5 μm to about 20 μm, for example, about 1 μm to about 10 μm, or about 1 μm to about 5 μm.

Hereinafter, the present disclosure is described in detail through Examples. However, the Examples described below are only examples for explaining the present disclosure, and the present disclosure is not limited to the examples described below.

## Example 1

(1) Manufacturing of Positive Electrode

$LiFePO_4$ as a first positive electrode active material, $Li_5FeO_4$ having an average particle diameter ($D_{50}$) of 12 μm as a first irreversible positive electrode additive, polyvinylidene fluoride as a binder, and carbon nanotube as a conductive material were mixed in a weight ratio of 93.49:1.91:3.0:1.6 (= first positive electrode active material:first irreversible positive electrode additive:binder:conductive material), and the mixture was added to an N-methyl pyrrolidone solvent and dispersed therein to prepare a composition for forming a first positive electrode active material layer.

$LiFePO_4$ as a second positive electrode active material, $Li_5FeO_4$ having an average particle diameter ($D_{50}$) of 4 μm as a second irreversible positive electrode additive, polyvinylidene fluoride as a binder, and carbon nanotube as a conductive material were mixed in a weight ratio of 93.49:1.91:3.0:1.6 (= second positive electrode active material:second irreversible positive electrode additive:binder:conductive material), and the mixture was added to an N-methyl pyrrolidone solvent and dispersed therein to prepare a composition for forming a second positive electrode active material layer.

The composition for forming a first positive electrode active material layer and the composition for forming a second positive electrode active material layer were simultaneously or contemporaneously coated on both surfaces of a positive electrode current collector by using a double slot die coating device, so that the positive electrode current collector, a first positive electrode active material layer, and a second positive electrode active material layer were sequentially formed, and then dried and compressed to manufacture a positive electrode.

In the compressed positive electrode, the first positive electrode active material layer on one surface of the positive electrode current collector had a thickness of 80 μm and porosity of 2%. The second positive electrode active material layer had a thickness of 78 μm and porosity of 10%. The other surface of the positive electrode current collector was the same as the above first surface.

(2) Manufacturing of Rechargeable Lithium Battery Cell

The above positive electrode was used with a lithium metal counter electrode as a negative electrode to manufacture a prismatic full cell. Between the positive electrode and the lithium metal counter electrode, an about 12 μm-thick separator made of a porous polyethylene film was disposed, and an electrolyte solution was injected thereinto. Herein, the electrolyte solution was prepared by mixing ethylenecarbonate (EC), ethylmethylcarbonate (EMC), and dimethylcarbonate (DMC) in a volume ratio of 25:55:20 and dissolving 1.15 M $LiPF_6$ in the mixed solvent.

## Comparative Example 1

$LiFePO_4$ as a positive electrode active material, $Li_5FeO_4$ having an average particle diameter ($D_{50}$) of 12μm as a first irreversible positive electrode additive, $Li_5FeO_4$ having an average particle diameter ($D_{50}$) of 4 μm as a second irreversible positive electrode additive, polyvinylidene fluoride as a binder, and carbon nanotube as a conductive material are mixed in a weight ratio of 93.49:0.955:0.955:3.0:1.6 (= positive electrode active material:first irreversible positive electrode additive:second irreversible positive electrode additive:binder:conductive material), and the mixture was added to an N-methyl pyrrolidone solvent and dispersed therein to prepare a composition for forming a positive electrode active material layer.

The composition for forming a positive electrode active material layer alone was coated on both surfaces of an aluminum film as the positive electrode current collector, and then dried and compressed, manufacturing a final positive electrode.

Subsequently, except for using this positive electrode instead of the positive electrode manufactured in Example 1 in the process of '(2) Manufacturing of Rechargeable Lithium Battery Cell', a rechargeable lithium battery cell was manufactured substantially in the same manner as in the Example 1.

## Comparative Example 2

A positive electrode and a rechargeable lithium battery cell were manufactured substantially in the same manner

as in Example 1, except that the composition for forming a first positive electrode active material layer was prepared by mixing a first positive electrode active material, a binder, and a conductive material in a weight ratio of 95.4:3.0:1.6, and then adding the mixture to a solvent and dispersing the mixture therein, and the composition for forming a second positive electrode active material layer was prepared by mixing a second positive electrode active material, a first irreversible positive electrode additive, a second irreversible positive electrode additive, a binder, and a conductive material in a weight ratio of 93.49:0.955:0.955:3.0:1.6, and then adding the mixture to a solvent and dispersing the mixture therein in the process of '(1) Manufacturing of Positive Electrode' in Example 1.

## Comparative Example 3

A positive electrode and a rechargeable lithium battery cell were manufactured substantially in the same manner as in Example 1, except that the composition for forming a first positive electrode active material layer was prepared by mixing a first positive electrode active material, a first irreversible positive electrode additive, a second irreversible positive electrode additive, binder, and a conductive material in a weight ratio of 93.49:0.955:0.955:3.0:1.6, and then adding the mixture to a solvent and dispersing the mixture therein, and the composition for forming a second positive electrode active material layer was prepared by mixing a second positive electrode active material, a binder, and a conductive material in a weight ratio of 95.4:3.0:1.6, and then adding the mixture to a solvent and dispersing the mixture therein in the process of '(1) Manufacturing of Positive Electrode' in Example 1.

## Comparative Example 4

A positive electrode and a rechargeable lithium battery cell were manufactured substantially in the same manner as in Example 1 except that the composition for forming a first positive electrode active material layer and the composition for forming a second positive electrode active material layer were substantially coated on both surfaces of a current collector in order of the positive electrode current collector, a second positive electrode active material layer, and a first positive electrode active material layer in the process of '(1) Manufacturing of Positive Electrode' in Example 1.

## Evaluation Example 1: Evaluation of SEM Photograph

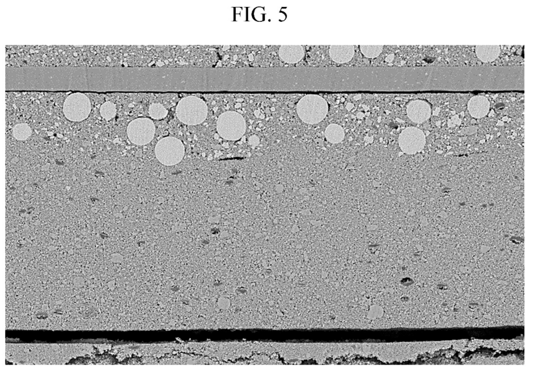

FIG. 5 is an SEM image of a cross-section of the positive electrode manufactured in Example 1. In the SEM image of the cross-section of FIG. 5, a lower region of the positive electrode current collector was enlarged, wherein a white portion at the top of FIG. 5 is the positive electrode current collector having the positive electrode active material layers on both surfaces. In particular, when looking at one surface, it can be confirmed that a large-particle irreversible positive electrode additive is present adjacent to the positive electrode current collector, while a small-particle irreversible positive electrode additive is far away from the positive electrode current collector. Through this, based on one surface of the positive electrode of Example 1, it can be confirmed that the positive electrode has a structure where the positive electrode current collector, the first positive electrode active material layer, and the second positive electrode active material layer are stacked together.

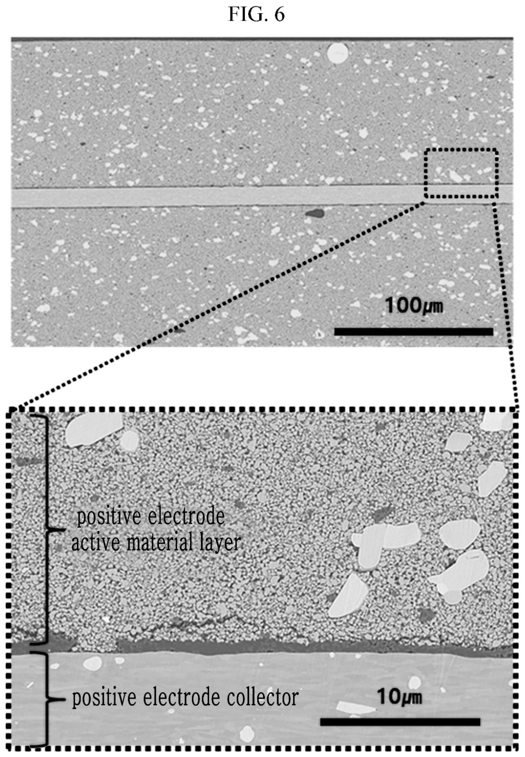

FIG. 6 shows an SEM image of a cross-section of the positive electrode of Comparative Example 1, wherein it can be confirmed that a positive electrode active material layer is formed on both surfaces of a white current collector in the middle, and when looking at the enlarged drawing, it can be confirmed that the irreversible positive electrode additives are not present into separate layers but randomly located through the entire positive electrode active material layer.

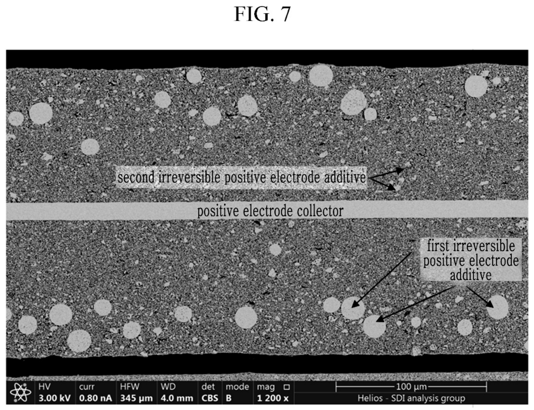

FIG. 7 is an SEM image of a cross-section of the positive electrode of Comparative Example 4, wherein a positive electrode active material layer is formed on both surfaces of a white current collector in the middle. In particular, on the both surfaces, it can be confirmed that a small-particle irreversible positive electrode additive is present adjacent to the positive electrode current collector, but a large-particle irreversible positive electrode additive is far away from the positive electrode current collector. Through this, the positive electrode of Comparative Example 4, unlike that of Example 1, based on one surface, can be confirmed to have a stacking structure of the positive electrode current collector-second positive electrode active material layer-first positive electrode active material layer in order.

## Evaluation Example 2: Interface Evaluation

### (1) Coating Adhesive Strength

In each of the positive electrodes of Example 1 and Comparative Examples 1 to 4, coating adhesive strength between positive electrode current collector and positive electrode active material layer is evaluated in the following method. Specifically, a double-sided adhesive tape was attached onto each of the positive electrode surfaces of Example 1 and Comparative Example 1 to 4, pressed at a load of 2 kgf, and then fixed to grippers at upper/lower ends of an adhesive

strength tester. Subsequently, the adhesive strength was measured, while peeling of the double-sided adhesive tape at an angle of 180 °. The results are shown in Table 1 below.

**(2) Mixture Resistance and Interface Resistance**

The positive electrodes of Example 1 and Comparative Examples 1 to 4 were evaluated with respect to mixture resistance and interfacial resistance between positive electrode current collector and positive electrode active material layer in the following method. Specifically, the mixture resistance and interfacial resistance of the positive electrodes of Example 1 and Comparative Examples 1 to 4 were measured by using a HIOKI resistance measuring device. The results are shown in Table 1 below.

**(3) Internal Resistance after Formation**

The rechargeable lithium battery cells of Example 1 and Comparative Examples 1 to 4 were measured with respect to internal resistance after formation in the following method. Specifically, after proceeding with the formation, the internal resistances of the rechargeable lithium battery cells were measured, while discharging them at a 1.0 C-rate at SOC50%, and the results are shown in Table 1 below. The formation step proceeded under the same condition as in the '(1) measurement of Initial charge and discharge capacity' of Evaluation Example 3 below.

Table 1:

| | Coating adhesive strength (gf/mm) | Mixture resistance (Ωcm) | Interfacial resistance ($\Omega cm^2$) | Internal resistance after formation (mΩ) |
|---|---|---|---|---|
| Example 1 | 3.33 | 2.87 | 0.008 | 15.28 |
| Comparative Example 1 | 3.14 | 3.76 | 0.019 | 15.74 |
| Comparative Example 2 | 2.77 | 3.11 | 0.016 | 15.51 |
| Comparative Example 3 | 3.17 | 3.81 | 0.012 | 15.98 |
| Comparative Example 4 | 3.09 | 3.22 | 0.02 | 15.73 |

Referring to Table 1, the positive electrode of Example 1 exhibited higher coating adhesive strength but lower mixture resistance and interfacial resistance than the coating adhesive strength, mixture resistance and interfacial resistance of Comparative Examples 1 to 4. This was because Example 1, in which an irreversible positive electrode additive having a relatively large average particle diameter ($D_{50}$) was close to a positive electrode current collector, secured high adhesive strength between a first positive electrode active material layer and the positive electrode current collector, and thereby achieving a reduced interfacial resistance.

On the other hand, Example 1 was confirmed to have lower internal resistance after the formation than the internal resistance of Comparative Examples 1 to 4, which confirmed that the small-particle irreversible positive electrode additive positioned on top facilitated discharge of gas generated during the formation and thus reduced or suppressed generation and accumulation of by-products, resulting in the lower internal resistance than the internal resistance of the comparative examples.

Through this, when the large-particle irreversible positive electrode additive was included in the first positive electrode active material layer adjacent to the positive electrode current collector, while the small-particle irreversible positive electrode additive was included in a second positive electrode active material layer disposed on the first positive electrode active material layer including the large-particle irreversible positive electrode additive, the adhesive strength between positive electrode current collector and positive electrode active material layer was increased, but the mixture resistance and interfacial resistance therebetween were reduced, and simultaneously or contemporaneously, the generation and accumulation of by-products were reduced or suppressed by facilitating discharge of gas generated during the formation facilitate, resulting in lowering the internal resistance after the formation.

**Evaluation Example 3: Battery Performance Evaluation**

**(1) Measurement of Initial Charge and Discharge Capacity**

The rechargeable lithium battery cells of Example 1 and Comparative Examples 1 to 4 were charged to an upper limit voltage of 4.2 V at a constant current of 0.2 C-rate and discharged to a cut-off voltage of 2.5 V at the 0.2 C-rate at 25 °C to measure initial charge and discharge capacity, which are shown in Table 2 below.

**(2) Cycle-life Characteristics under High-temperature and High-voltage Conditions**

The rechargeable lithium battery cells of Example 1 and Comparative Examples 1 to 4 were charged to SOC 100% at a constant current of 0.33 C-rate and cut-off at a current of 0.02 C-rate, while maintaining 3.65 V, at 45 °C. Subsequently, the cells were discharged to a voltage of 2.5 V at a constant current of 0.33 C-rate (formation step, 1st cycle).

After the formation step of the 1st cycle, the rechargeable lithium battery cells were constant current-charged to 3.65 V at the current of 0.33 C-rate. The charged cells were paused for about 10 minutes and constant current-discharged to a voltage of 2.5 V at the current of 0.33 C-rate, and this cycle was repeated 30 times in total.

The cells were evaluated with respect to cycle-life (@3.65 V) characteristics according to Equation 1 below, and the results are shown in Table 2 below.

Cycle-life (%) = (30th cycle discharge capacity/1st cycle discharge capacity) $\times$ 100. Equation 1:

Table 2:

| | Initial charge capacity (mAh/g) | Initial discharge capacity (mAh/g) | Initial charge and discharge efficiency (%) | Cycle-life (%) (3.65V, 30 cycle) |
|---|---|---|---|---|
| Example 1 | 177.9 | 152.6 | 85.8 | 102.6 |
| Comparative Example 1 | 175.4 | 151.7 | 86.5 | 102.1 |
| Comparative Example 2 | 175.6 | 152.0 | 86.7 | 101.4 |
| Comparative Example 3 | 174.2 | 151.3 | 86.9 | 101.2 |
| Comparative Example 4 | 176.5 | 152.0 | 86.1 | 102.4 |

Referring to Table 2 above, Example 1 was confirmed to exhibit the highest initial charge capacity but the lowest initial charge and discharge efficiency. The initial charge and discharge efficiency of Table 2 means that because the irreversible positive electrode additives (first and second irreversible positive electrode additives) were activated but after lithium was stored in negative electrodes, deactivated, the lower efficiency, the more lithium was stored in negative electrodes,

Accordingly, it can be confirmed that lithium was more stored in the negative electrode of Example 1, and considering higher cycle-life of Example 1 than the cycle-life of the comparative examples, the rechargeable lithium battery cell of Example 1, as described above, did not only exhibit the most desired or improved adhesive strength with the interface of the positive electrode current collector and the lowest mixture resistance, interfacial resistance, and internal resistance after the formation, but also exhibited improved battery performance.

While this disclosure is described in connection with what is presently considered to be practical example embodiments, it is to be understood that the disclosure is not limited to the disclosed example embodiments. The disclosure is intended to cover various modifications and equivalent arrangements included within the spirit and scope of the appended claims.

**Description of Symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

**1.** A positive electrode, comprising:

a positive electrode current collector; and
a positive electrode active material layer on the positive electrode current collector;
wherein the positive electrode active material layer comprises:

a first positive electrode active material layer adjacent to the positive electrode current collector, and
a second positive electrode active material layer facing the positive electrode current collector with the first positive electrode active material layer interposed therebetween;
the first positive electrode active material layer comprises a first positive electrode active material and a first irreversible positive electrode additive,
the second positive electrode active material layer comprises a second positive electrode active material and a second irreversible positive electrode additive, and
an average particle diameter ($D_{50}$) of the first irreversible positive electrode additive is larger than an average particle diameter ($D_{50}$) of the second irreversible positive electrode additive.

**2.** The positive electrode as claimed in claim 1, wherein the first positive electrode active material and the second positive electrode active material are each independently represented by one of Chemical Formula 13 and Chemical Formula 14:

Chemical Formula 13: $Li_{a13}Fe_{(1-x13)}M^{14}_{x13}PO_4$;

wherein, in Chemical Formula 13, $0.90 \le a13 \le 1.5$, $0 \le x13 \le 0.4$, and $M^{14}$ comprises at least one of Al, B, Ca, Ce, Cr, Cu, La, Mg, Mn, Mo, Nb, Ni, Si, Sn, Sr, Ti, V, W, Y, Zn, Zr, and a combination thereof,

Chemical Formula 14: $Li_{a14}Mn_{x14}Fe_{(1-x14-y14)}M^{15}_{y14}PO_4$;

wherein, in Chemical Formula 14, $0.90 \le a14 \le 1.5$, $0.1 \le x14 \le 0.9$, $0 \le y14 \le 0.9$, and $M^{15}$ comprises at least one of Al, B, Ca, Ce, Cr, Cu, La, Mg, Mo, Nb, Ni, Si, Sn, Sr, Ti, V, W, Y, Zn, Zr, and a combination thereof.

**3.** The positive electrode as claimed in claim 1, wherein the first positive electrode active material and the second positive electrode active material each independently comprises at least one of $LiFePO_4$, $LiMn_{0.7}Fe_{0.3}PO_4$, $LiMn_{0.6}Fe_{0.4}PO_4$, $LiMn_{0.5}Fe_{0.5}PO_4$, $LiMn_{0.4}Fe_{0.6}PO_4$, $LiMn_{0.3}Fe_{0.7}PO_4$, and a combination thereof.

**4.** The positive electrode as claimed in claim 1, wherein the first irreversible positive electrode additive and the second irreversible positive electrode additive each independently comprises at least one of a lithium iron-based oxide, a lithium cobalt-based oxide, a lithium nickel-based oxide, and a combination thereof.

**5.** The positive electrode as claimed in claim 1, wherein:

an average particle diameter ($D_{50}$) of the first irreversible positive electrode additive is in a range of 5 μm to 20 μm; and
an average particle diameter ($D_{50}$) of the second irreversible positive electrode additive is in a range of 0.1 μm to 4.8 μm.

**6.** The positive electrode as claimed in claim 1, wherein a ratio of the average particle diameter ($D_{50}$) of the first irreversible positive electrode additive to the average particle diameter ($D_{50}$) of the second irreversible positive electrode additive is greater than 1 and less than or equal to 10.

**7.** The positive electrode as claimed in claim 1, wherein:

an amount of the first irreversible positive electrode additive is in a range of 0.1 wt% to 3 wt% based on a total weight (100 wt%) of the first positive electrode active material layer; and
an amount of the second irreversible positive electrode additive is in a range of 0.1 wt% to 3 wt% based on a total weight (100 wt%) of the second positive electrode active material layer.

**8.** The positive electrode as claimed in claim 1, wherein a weight ratio of the first irreversible positive electrode additive to the second irreversible positive electrode additive is in a range of 1:9 to 9:1.

**9.** The positive electrode as claimed in claim 1, wherein:

a thickness of the first positive electrode active material layer is in a range of 20 μm to 300 μm; and
a thickness of the second positive electrode active material layer is in a range of 20 μm to 300 μm.

**10.** The positive electrode as claimed in claim 1, wherein:

a porosity of the first positive electrode active material layer is less than 10%; and
a porosity of the second positive electrode active material layer is in a range of 10% to 50%.

**11.** The positive electrode as claimed in claim 1, wherein:

the first positive electrode active material is included in an amount in a range of 90 wt% to 98 wt% based on a total weight (100 wt%) of the first positive electrode active material layer; and
the second positive electrode active material is included in an amount in a range of 90 wt% to 98 wt% based on a total weight (100 wt%) of the second positive electrode active material layer.

**12.** The positive electrode as claimed in claim 1, wherein the first positive electrode active material layer and the second positive electrode active material layer each independently further comprises at least one of a binder, a conductive material, and a combination thereof.

**13.** A rechargeable lithium battery, comprising the positive electrode as claimed in claim 1, a negative electrode, and an electrolyte.

100
60
10
40
30
20
50

FIG. 1

FIG. 2
100
50
11
10
12
40
30
22
20
21

FIG. 3

100
50
72
40
10
30
20
71

FIG. 4

100
50
40
20
30
10
70

FIG. 5

FIG. 6

100μm
positive electrode
active material layer
positive electrode collector
10μm

FIG. 7

second irreversible positive electrode additive
positive electrode collector
first irreversible positive electrode additive
HV 3.00 kV
curr 0.80 nA
HFW 345 μm
WD 4.0 mm
det CBS
mode B
mag 1 200 x
100 μm
Helios - SDI analysis group

# EUROPEAN SEARCH REPORT

Application Number

EP 26 15 7446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | CN 117 296 164 A (A123 SYSTEMS LLC) 26 December 2023 (2023-12-26)<br>* paragraphs [0033], [0040], [0074], [0119]; claim 12; figure 2 *<br>----- | 1-4,6-8, 10-13<br>5,9 | INV.<br>H01M4/136<br>H01M4/36<br>H01M4/58 |
| Y | US 2023/327090 A1 (LI SHUOYU [CN] ET AL) 12 October 2023 (2023-10-12)<br>* paragraphs [0113], [0118] *<br>----- | 5 | |
| Y | US 2024/243247 A1 (ZHONG HUAWEI [CN]) 18 July 2024 (2024-07-18)<br>* paragraph [0065] *<br>----- | 9 | |

TECHNICAL FIELDS SEARCHED (IPC)

H01M

The present search report has been drawn up for all claims

1

| Place of search | Date of completion of the search | Examiner |
|---|---|---|
| Munich | 28 May 2026 | Jovanov, Zarko |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 26 15 7446

This annex lists the patent family members relating to the patent documents cited in the above-mentioned European search report. The members are as contained in the European Patent Office EDP file on
The European Patent Office is in no way liable for these particulars which are merely given for the purpose of information.

28-05-2026

| Patent document cited in search report | Publication date | Patent family member(s) | Publication date |
|---|---|---|---|
| CN 117296164 A | 26-12-2023 | CN 117296164 A | 26-12-2023 |
| | | EP 4320651 A1 | 14-02-2024 |
| | | JP 2024516715 A | 16-04-2024 |
| | | KR 20240005000 A | 11-01-2024 |
| | | US 2022359862 A1 | 10-11-2022 |
| | | US 2025357473 A1 | 20-11-2025 |
| | | WO 2022236220 A1 | 10-11-2022 |
| US 2023327090 A1 | 12-10-2023 | CN 114530634 A | 24-05-2022 |
| | | EP 4235858 A1 | 30-08-2023 |
| | | JP 7612985 B2 | 15-01-2025 |
| | | JP 2023550443 A | 01-12-2023 |
| | | US 2023327090 A1 | 12-10-2023 |
| | | WO 2022105259 A1 | 27-05-2022 |
| US 2024243247 A1 | 18-07-2024 | CN 114843440 A | 02-08-2022 |
| | | EP 4550441 A1 | 07-05-2025 |
| | | JP 7858093 B2 | 13-05-2026 |
| | | JP 2025520824 A | 03-07-2025 |
| | | US 2024243247 A1 | 18-07-2024 |
| | | WO 2024002355 A1 | 04-01-2024 |

EPO FORM P0459

For more details about this annex : see Official Journal of the European Patent Office, No. 12/82